# EUROPÄISCHE PATENTSCHRIFT

(11) **EP 3 266 687 B1**
(45) Veröffentlichungstag und Bekanntmachung des Hinweises auf die Patenterteilung: **10.03.2021**
(21) Anmeldenummer: 16177797.4
(22) Anmeldetag: 04.07.2016
(51) Int. Cl.: B62D 33/04

(54) **VERFAHREN FÜR DIE REPARATUR EINES FLÄCHENELEMENTS EINES AUFBAUS FÜR EIN NUTZFAHRZEUG**
METHOD FOR REPAIRING A SURFACE MEMBER OF A STRUCTURE FOR A COMMERCIAL VEHICLE
PROCEDE DE REPARATION D'UN ELEMENT DE SURFACE D'UNE STRUCTURE D'UN VEHICULE AUTOMOBILE

(43) Veröffentlichungstag der Anmeldung: 10.01.2018
(73) Patentinhaber: Schmitz Cargobull AG, 48341 Altenberge (DE)
(72) Erfinder: Ahler, Wilhelm, 48703 Stadtlohn (DE)
(74) Vertreter: Cohausz & Florack

(56) Entgegenhaltungen:
- US-A- 5 092 095
- US-A- 5 343 665
- US-A- 5 363 606
- US-A- 5 673 524
- US-A- 5 997 076
- US-A1- 2009 233 022
- US-A1- 2009 235 604
- US-B2- 8 720 974

## Beschreibung

Die Erfindung betrifft ein Verfahren zum Instandsetzen eines beschädigten Flächenelements eines Aufbaus eines Nutzfahrzeugs, wobei das Flächenelement zwei mit Abstand zueinander angeordnete Decklagen aus einem formsteifen Material und eine Isolierlage aus einem thermisch isolierenden Material aufweist.

Bei Nutzfahrzeugen der hier in Rede stehenden Art handelt es sich typischerweise um konventionelle Lastkraftwagen, Anhänger für solche Lastkraftwagen oder um von einer Zugmaschine gezogene Satteltauflieger, in der Fachsprache auch "Trailer" genannt.

Die auf solchen Nutzfahrzeugen vorgesehenen Aufbauten umgrenzen einen Laderaum und schützen das darin transportierte Gut gegen äußere Einflüsse. Dabei sind die Aufbauten in der Regel so konzipiert, dass sie das Transportgut nicht nur gegen Staub, Feuchtigkeit und desgleichen abschirmen, sondern auch thermisch gegenüber der Umgebung isolieren. Speziell für Transporte von temperaturempfindlicher Ware, wie Tiefkühlprodukten, werden hier hohe Anforderungen an die thermische Isolierung gestellt.

Beispiele für Nutzfahrzeuge, die für diese Zwecke eingerichtet sind, sind in der Broschüre "Die Kofferfahrzeuge - Das Produktprogramm", herausgegeben von der Anmelderin, Druckvermerk S.KO-FLY-DE1-6539-3414, beschrieben, die unter der URL http://www.cargobull.com/de/Download-Center_216_358.html zum Download bereitgestellt ist.

In dieser Broschüre findet sich unter dem Stichwort "Ferroplast mit NX17-Schaum" auch eine Beschreibung des Aufbaus der Flächenelemente, auf denen die Aufbauten der in der Broschüre beschriebenen Fahrzeuge basieren.

Wie dort dargelegt, handelt es sich bei den hier in Rede stehenden Flächenelementen typischerweise um die Seitenwände oder das Dach der Aufbauten, die sich über eine große Länge erstrecken.

Die Decklagen der Flächenelemente sind dabei typischerweise aus Einzelsegmenten zusammengesetzt, die, wie in der Broschüre erläutert, zwei beabstandet angeordnete Decklagen und die dazwischen angeordnete, aus einem thermisch hoch wirksam isolierenden Schaum bestehende Isolierlage umfassen. Die form- und beulsteifen Decklagen übernehmen dabei mehrere Funktionen und sind zu diesem Zweck selber aus unterschiedlichen Schichten zusammengesetzt.

Die Flächenelemente von Aufbauten der hier in Rede stehenden Art sind so konzipiert, dass sie bei einer Beschädigung auf vergleichbar einfache Weise repariert werden können. Hierzu erweist es sich als besonders vorteilhaft, wenn zumindest die Decklagen der Flächenelemente aus Einzelsegmenten zusammengesetzt sind, wie ebenfalls in der oben genannten Broschüre erläutert. Die Segmentierung der Decklage erlaubt ein einfaches Heraustrennen der beschädigten Abschnitte des Flächenelements. Allerdings erweist es sich in der Praxis als aufwändig, die in den meisten Fällen großflächigen Paneelen, die als Ersatz für den beschädigten Abschnitt in das Flächenelement eingesetzt werden müssen, im Werk des Fahrzeugherstellers zu produzieren und anschließend zum Reparaturwerk zu transportieren.

Zusätzlich zu dem voranstehend erläuterten Stand der Technik ist aus der US 8,720,974 ein Verfahren zur Verbindung von Seitenwandpaneelen eines Frachtbehälters eines Nutzfahrzeugs bekannt. Die Seitenwandpaneele weisen dabei jeweils ein Kernelement, das an seinen Außenflächen mit jeweils einer Metallschicht als Decklage belegt ist. Die Seitenwandpaneele sind derart miteinander verbunden, dass die Kernelemente mit ihren einander zugeordneten Fügeseiten gegeneinander stoßend ausgerichtet sind, wobei die Seitenwandpaneele mittels einer Verklebung von an den beiden Deckschichten ausgebildeten, gegenüber dem Kernelement vorstehenden Laschenabschnitten miteinander verbunden werden, die auf der Deckschicht des jeweils anderen Seitenwandpaneels aufliegen. Ein Zusammenhang mit einer Instandsetzung eines beschädigten Flächenelements eines Nutzfahrzeugaufbaus wird bei diesem Stand der Technik nicht hergestellt.

Die US 2009/0233022 A1 offenbart des Weiteren Seitenwandpaneele für einen Nutzfahrzeugaufbau, welche jeweils aus einem Kernteil, einer inneren Schicht sowie einer äußeren Schicht zusammengesetzt sind. Zur Verbindung der Seitenwandpaneele untereinander werden einander zugeordnete Fügeseiten der Kernteile gegeneinander stoßend ausgerichtet, wobei die äußere sowie die innere Schicht wiederum Laschenabschnitte aufweisen, die jeweils auf einer Einsenkung der äußeren bzw. der inneren Schicht des nächst benachbarten Paneels aufliegen, so dass eine ebene Oberfläche gebildet ist. Auch bei diesem Stand der Technik besteht kein Zusammenhang mit einer Instandsetzung eines beschädigten Flächenelements eines Nutzfahrzeugaufbaus.

Neben dem voranstehend erläuterten Stand der Technik, der sich auf Nutzfahrzeugaufbauten bezieht, sind aus verschiedenen Dokumenten Möglichkeiten der Gestaltung und der Verbindung von vorgefertigten Paneelen bekannt, die als Gebäudewände zum Einsatz kommen sollen, also für die Herstellung von stationären Bauten. Hierbei handelt es sich jeweils um Anwendungen, die fern von der hier interessierenden Problemstellung liegen.

Zu dem sich auf Bauzwecke beziehenden Stand der Technik zählen die in der US 2009/0235604 A1 beschriebenen, für architektonische Anwendungen bestimmten Paneel-Bauteile, die jeweils eine Platte als Mittellage sowie eine erste und eine zweite Metallplatte aufweisen, die auf den Außenseiten der Mittellage aufliegen. Bei der Montage mehrerer Paneel-Bauteile werden die Fügeseiten von deren Mittellage gegeneinander stoßend ausgerichtet, wobei die Paneele über an einer der Metallplatte angeformte Laschenabschnitte, die das jeweils benachbarte Paneelbauteil überlappen, miteinander fest verbunden sind.

Auch die US 5,673,524 A zeigt Paneele für Bauzwecke, die jeweils eine Isolierlage und zwei die jeweilige Isolierlage umgebende Metallschichten aufweisen. Auch hier besitzen die Metallschichten jeweils zwei Laschenabschnitte, welche bei diesem Stand der Technik mit einer bestimmten geometrischen Struktur versehen sind, die es ermöglichen soll, aneinander angrenzend angeordnete Baupaneele formschlüssig miteinander zu verbinden.

Die US 5,343,665 A zeigt ebenfalls modulare Baupaneele, die einen Isolierkern aufweisen, wobei der Isolierkern mit einem ersten Paneel und einem zweiten Paneel als Decklage beschichtet ist. Die Decklagen besitzen bei diesem Stand der Technik ebenfalls zueinander korrespondierende Laschenabschnitte mit einer geometrischen Struktur, die es ermöglichen soll, die Baupaneele miteinander zu verbinden.

Schließlich handelt es sich auch bei dem aus US 5,092,095 A bekannten Paneel um eine konventionelle Bauplatte, die zum Bau von stationären Gebäuden bestimmt ist. Die Bauplatte weist einen Kern aus Schaumstoff auf, der auf den einander gegenüberliegenden, nach außen gewandten Seiten mit jeweils einer Metallschicht verbunden ist. Die Metallschichten sind als Decklagen ausgestaltet und weisen zueinander korrespondierende Laschenabschnitte auf, mittels derer aneinander angrenzend angeordnete Paneele miteinander verbunden werden können. Durch eine besondere Ausgestaltung der Laschenabschnitte soll insbesondere die Abdichtung der Fügefuge zwischen zwei miteinander verbundenen Paneelen gewährleistet werden können.

Vor diesem Hintergrund hat sich die Aufgabe ergeben, ein Verfahren zu schaffen, mit dem es auf einfache Weise möglich ist, Flächenelemente für einen Aufbau eines Nutzfahrzeugs der voranstehend erläuterten Art zu reparieren.

Die Erfindung hat diese Aufgabe durch das in Anspruch 1 angegebene Verfahren gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Ein für die Reparatur eines Flächenelements eines Aufbaus für ein Nutzfahrzeug eingesetztes Ersatzpaneel ist demnach so ausgeführt,
- dass es aus mindestens zwei separat vorgefertigten Paneelsegmenten zusammengesetzt ist, die jeweils zwei mit Abstand zueinander angeordnete Decklagen und eine den Abstand zwischen den Decklagen füllende Isolierlage umfassen,
- dass die Paneelsegmente derart zusammengestellt sind, dass ihre Isolierlagen mit ihren einander zugeordneten Fügeseiten gegeneinander stoßend ausgerichtet sind, und
- dass aneinander angrenzend angeordnete Paneelsegmente über Laschenabschnitte miteinander fest verbunden sind, die mindestens an eine ihrer Decklagen angeformt sind und die Isolierlage des jeweils angrenzenden Paneelsegments überlappend auf diesem Paneelsegment aufliegen.

Dementsprechend sieht das Verfahren zum Instandsetzen eines beschädigten Flächenelements eines Aufbaus eines Nutzfahrzeugs, bei dem das Flächenelement zwei mit Abstand zueinander angeordnete Decklagen aus einem formsteifen Material und eine Isolierlage aus einem thermisch isolierenden Material aufweist, das den Abstand zwischen den Decklagen füllt, folgende Arbeitsschritte vor:
a) Heraustrennen des Abschnitts des Flächenelements, über den sich die Beschädigung erstreckt, wobei das Heraustrennen derart erfolgt, dass der beschädigte Abschnitt vollständig aus dem Flächenelement entfernt wird und nach dem Heraustrennen an Stelle des herausgetrennten Abschnitts eine Öffnung vorhanden ist,
b) Einsetzen eines Ersatzpaneels in die im Arbeitsschritt a) erzeugte Öffnung, wobei die Abmessungen des Ersatzpaneels derart an die Abmessungen der Öffnung angepasst sind, dass nach dem Einsetzen die Öffnung durch das Ersatzpaneel vollständig geschlossen ist und das Ersatzpaneel in jeweils einer Fügezone an die angrenzenden Abschnitte des Flächenelements angeschlossen ist, wobei die Ersatzpaneele mit einander zugeordneten Fügeseiten gegeneinander stoßend ausgerichtet sind,
c) Befestigen des Ersatzpaneels in der Öffnung
wobei erfindungsgemäß eine Anzahl von identisch geformten und bemessenen Paneelsegmenten bereitgestellt wird, die jeweils zwei mit Abstand zueinander angeordnete Decklagen und eine den Abstand zwischen den Decklagen füllende Isolierlage umfassen, wobei an mindestens eine der Decklagen der Paneelsegmente ein Laschenabschnitt angeformt ist, dass für die Herstellung des Ersatzpaneels zwei oder mehr dieser Paneelsegmente mit ihren Fügeseiten aneinander stoßend aufgereiht werden, so dass die Laschenabschnitte von aneinander angrenzend angeordneten Paneelsegmenten die Isolierlage des jeweils angrenzenden Paneelsegments überlappend auf diesem Paneelsegment aufliegen und dass die Ersatzpaneele derart zusammengestellt sind, dass ihre Isolierlagen mit ihren einander zugeordneten Fügeseiten gegeneinander stoßend ausgerichtet sind, unddass die in der so gebildeten Aufreihung benachbart zueinander angeordneten Paneelsegmente über die Laschenabschnitte fest miteinander zu dem Ersatzpaneel verbunden werden.

Die Erfindung beruht somit auf dem Vorschlag, das für eine Reparatur eines Flächenelements für einen Nutzfahrzeug-Aufbau benötigte Ersatzpaneel aus mehreren, d.h. mindestens zwei, Ersatzpaneelen zusammenzusetzen. Diese Ersatzpaneele weisen dabei vorzugsweise eine einheitliche Größe und Form auf. Insbesondere ist die in Längsrichtung des Flächenelements gemessene Länge der Isolierlage der Paneelsegmente optimalerweise so bemessen, dass mit einer ganzzahligen Anzahl von Paneelsegmenten die vom zu reparierenden Flächenelement eingenommene Länge vollständig belegt werden kann.

Die Länge der Isolierlage ist dabei die maßgebliche Bezugsgröße, weil die Isolierlagen benachbarter Paneelsegmente aneinander stoßend positioniert sind, die Einzellängen der Isolierlagen sich also zur "effektiven" Gesamtlänge des Ersatzpaneels addieren.

Wenn hier von einer aneinander stoßenden Positionierung der Isolierlagen die Rede ist, so meint dies, dass die Isolierlagen mit ihren der jeweiligen Fügezone zwischen zwei Paneelsegmenten zugewandten Fügeseiten möglichst dicht aneinander anliegen. Dies schließt selbstverständlich die Möglichkeit ein, dass in der Fügezone zwischen den Fügeseiten zweier benachbarter Paneelsegmente beispielsweise eine Klebstofflage, ein Dichtstreifen oder desgleichen vorhanden ist, dass also kein unmittelbarer Kontakt zwischen den Fügeseiten der aneinander angrenzenden Paneelsegmente besteht.

Genauso erstreckt sich die Höhe der erfindungsgemäß vorgesehenen Paneelsegmente vorzugsweise über die Höhe des zu reparierenden Flächenelements, so dass bei einem beispielsweise als Seitenwand eines Nutzfahrzeug-Aufbaus dienenden Flächenelement die Fügezonen zwischen den Segmenten im fertig montierten Zustand jeweils ausschließlich vertikal verlaufen. Genauso erstrecken sich im Fall, dass es sich bei dem Flächenelement um ein Dach eines Nutzfahrzeugs handelt, bei einer solchen Ausgestaltung die Paneelsegmente jeweils über die gesamte Breite des Dachs.

Dabei wird hier selbstverständlich nur der Teil des Flächenelements betrachtet, der mittels eines paneelartigen Bestandteils geschlossen ist. D.h., die Stützen, Rungen, Eckprofile oder sonstigen Elemente, die zur ordnungsgemäßen Befestigung des Flächenelements benötigt werden, werden in die Segmentierung typischerweise nicht einbezogen.

Der Vorteil der erfindungsgemäßen Segmentierung des Ersatzpaneels besteht an erster Stelle darin, dass die erfindungsgemäß vorgesehenen Paneelsegmente gegenüber den heute üblichen Ersatzpaneelen deutlich kleinere Abmessungen, insbesondere Längen, und eine standardisierte Form aufweisen. Auf diese Weise lassen sie sich nicht nur besonders kostengünstig in großen Stückzahlen vorproduzieren, sondern können auch ohne besonderen Aufwand zur Reparaturwerkstatt transportiert werden. Auch für die Aufbewahrung in der Werkstatt ergeben sich keine besonderen Anforderungen an den zur Verfügung stehenden Raum, so dass der Reparaturbetrieb problemlos für die Reparatur erfindungsgemäß vorgesehene Paneelsegmente bevorraten kann. Die dadurch signifikant erhöhte Verfügbarkeit erlaubt eine deutliche Reduzierung der für eine Reparatur erforderlichen Verweilzeiten in der Werkstatt.

Die feste Verbindung zwischen den Paneelsegmenten eines erfindungsgemäß eingesetzten Ersatzpaneels erfolgt über Laschenabschnitte, die an mindestens eine der Decklagen so angeformt sind, dass sie bei zusammengefügten Paneelsegmenten das jeweils benachbarte Segment überlappen. Im Bereich der Überlappung können die Paneelsegmente dann miteinander verklebt oder in jeder anderen geeigneten Weise miteinander verbunden werden, wobei eine Verklebung nicht nur den Vorteil einer einfachen Machbarkeit, sondern auch einer dichten Verbindung hat.

Die erfindungsgemäß vorgesehene Aneinanderreihung der Paneelsegmente derart, dass die Segmente jeweils mit den einander zugeordneten Schmalseiten ihrer Isolierlagen gegeneinander stoßen, kann dabei dadurch bewerkstelligt werden, dass jeweils mindestens eine der Decklagen der Paneelsegmente mit jeweils einem Laschenabschnitt über die Fügeseiten der Isolierlage des jeweiligen Paneelsegments hinaussteht, wogegen die andere Decklage des betreffenden Paneelsegments vor oder an dieser Fügeseite seiner Isolierlage endet. Der Laschenabschnitt steht dann nach Art einer Fahne als Verlängerung der Decklage von dem Paneelsegment ab, wobei der Laschenabschnitt insbesondere an die eine Kante zwischen der mit dem Laschenabschnitt versehenen Decklage und der zugeordneten Fügeseite der Isolierlage angeformt sein kann. In diesem Fall ergibt sich optimalerweise ein sprungfreier Übergang zwischen der freien Außenseite der Decklage und dem Laschenabschnitt.

Es kann aber, beispielsweise aus gestalterischen Gründen, auch zweckmäßig sein, zwischen dem Laschenabschnitt und der Decklage, an die er angeformt ist, gezielt ein Formelement, wie eine Sicke oder desgleichen, einzubringen, um die Segmentierung bewusst zu betonen. Dies kann beispielsweise dann sinnvoll sein, wenn das Ersatzpaneel in ein Flächenelement eingebaut werden soll, das bereits ebenfalls, zumindest optisch, in entsprechender Weise segmentiert ist.

Eine optimierte Anbindung der Paneelsegmente aneinander kann dadurch erreicht werden, dass jedes Paneelelement, welches zwischen zwei Nachbarsegmenten sitzt, zwei Laschenabschnitte aufweist, wobei über den einen Laschenabschnitt eine Verbindung mit dem einen und über den anderen Laschenabschnitt eine Verbindung mit dem anderen Nachbar-Paneelsegment hergestellt ist.

Hierzu kann gemäß einer ersten Ausgestaltung die erste Decklage mindestens eines der Paneelsegmente mit einem ersten Laschenabschnitt über die eine Fügeseite der Isolierlage hinausstehen, wogegen sie an ihrer gegenüberliegenden Seite an oder vor der dort vorhandenen Fügeseite der Isolierlage des jeweiligen Paneelsegments endet, wogegen die zweite Decklage der Paneelsegmente mit einem Laschenabschnitt jeweils über diese Fügeseite der Isolierlage hinaussteht und die zweite Decklage an ihrer gegenüberliegenden anderen Seite vor oder an der Fügeseite der Isolierlage endet, die dem Laschenabschnitt der ersten Decklage des betreffenden Paneelsegments zugeordnet ist. Ausgehend von dem in der Reihe ersten Paneelsegment liegt in diesem Fall das nächstfolgende zweite Segment an einem zum zweiten Segment weisenden Laschenabschnitt des ersten Paneelsegments an. Gleichzeitig liegt das zweite Paneelsegment mit seinem dem ersten Segment zugeordneten Laschenabschnitt seitlich an der zu dessen Laschenelement gegenüberliegenden Seite des ersten Paneelsegments an. Dies setzt sich mit allen folgenden Paneelsegmenten fort.

Alternativ ist es möglich, dass die erste Decklage mindestens eines der Paneelsegmente mit einem ersten Laschenabschnitt über die eine Fügeseite und mit einem zweiten Abschnitt über die zweite Fügeseite der Isolierlage des jeweiligen Paneelsegments hinaussteht, wogegen die zweite Decklage mit ihren den Fügeseiten der Isolierlage des jeweiligen Paneelsegments zugeordneten Seiten jeweils an oder vor der zugeordneten Fügeseite der Isolierlage endet. Bei dieser Ausgestaltung lassen sich die Paneelsegmente wechselweise auf- bzw. aneinander legen. D.h., das erste Paneelsegment einer Reihe wird so ausgerichtet, dass seine Laschenabschnitte an der einen Seite des Ersatzpaneels angeordnet sind, während das nächste Paneelsegment so ausgerichtet wird, dass sich seine Laschenabschnitte an der anderen Seite des Ersatzpaneels befinden. Auch hier ist somit jedes Paneelsegment auf seinen beiden Seiten über jeweils einen Laschenabschnitt mit dem nächst benachbarten Segment verbunden.

Selbstverständlich können gemäß den beiden voranstehend erläuterten Alternativen ausgestaltete Paneelsegmente auch miteinander kombiniert werden. Dies kann beispielsweise sinnvoll sein, wenn ein erfindungsgemäß eingesetztes Ersatzpaneel in eine in das Flächenelement eingeschnittene Öffnung eingesetzt werden soll und die an den endseitig angeordneten Paneelsegmenten vorhandenen Laschenabschnitte zum Befestigen des Ersatzpaneels an den belassenen, unbeschädigten Abschnitten des Flächenelements befestigt werden sollen.

Um eine exakt an die Dicke des zu reparierenden Flächenelements angepasste Dicke des Ersatzpaneels zu bewerkstelligen, kann es zweckmäßig sein, wenn die Decklagen an den Seiten, an denen sie keinen Laschenabschnitt tragen, mit einem in Längsrichtung gemessenen Abstand vor der zugeordneten Fügeseite der Isolierlage enden, der höchstens dem in Längsrichtung gemessenen Abstand entspricht, über den die vorhandenen Laschenabschnitte der Decklagen über die zugeordnete Fügeseite der Isolierlage hinausstehen. Die Laschenabschnitte und die Decklagen der miteinander verbundenen Paneelsegmente können bei dieser Ausgestaltung problemlos in einer Ebene angeordnet werden, so dass sich ein optisch einwandfreier, ebener Eindruck des Ersatzpaneels ergibt, ohne dass dazu aufwändige Nacharbeiten erforderlich sind.

Die Steifigkeit und Belastbarkeit der Verbindungszone können bei dieser Ausgestaltung dadurch unterstützt werden, dass mindestens eines der Paneelsegmente in dem Bereich, in dem seine Isolierlage vom Laschenabschnitt des angrenzend angeordneten Paneelsegments überdeckt ist, ein in die Isolierlage des Paneelsegments eingelassenes und unter die zugeordnete Decklage des Paneelsegments reichendes Verstärkungselement umfasst. Bei dem Verstärkungselement kann es sich um ein Blechteil handeln, welches in Bezug auf die Fläche der Isolierlage, auf der die eine der Decklagen aufliegt, flächenbündig in die betreffende Isolierlage eingelassen ist. Ein solches Verstärkungselement ist insbesondere dann sinnvoll, wenn die Verbindung zwischen den angrenzend aneinander angeordneten Paneelsegmenten mittels einer Verklebung hergestellt werden soll.

Die Erfindung ermöglicht eine solche großflächige und damit besonders haltbare und dichte Verklebung dadurch, dass die Verklebung im Überlappungsbereich zwischen dem jeweiligen Paneelsegment und dem auf ihm aufliegenden Laschenabschnitt des angrenzend angeordneten Paneelsegments vorgesehen ist.

Die Haltbarkeit und Passgenauigkeit der Verbindung der Paneelsegmente eines erfindungsgemäß eingesetzten Ersatzpaneels kann auch dadurch unterstützt werden, dass die Laschenabschnitte der Paneelsegmente an ihrer freien Stirnseite hakenförmig abgekröpft sind und die Decklagen der Paneelsegmente an ihren den Fügeseiten der Isolierlage zugeordneten Seiten, an denen sie keinen Laschenabschnitt tragen, mit einer Sicke versehen sind, in die der Laschenabschnitt des angrenzend angeordneten Paneelsegments formschlüssig greift. Eine solche Gestaltung kann zusätzlich auch genutzt werden, um die Segmentierung in Anpassung an das Erscheinungsbild des zu reparierenden Flächensegments im Neuzustand optisch zu betonen. Darüber hinaus können die Sicke und die in sie greifende Abkröpfung als Ort für ein Dichtelement genutzt werden, durch das die Fügezone zwischen den Paneelsegmenten des erfindungsgemäß eingesetzten Ersatzpaneels zusätzlich abgedichtet und verhindert wird, dass noch fließfähiger Klebstoff während der Montage aus der Fügezone in die Umgebung gelangt.

Es versteht sich von selbst, dass ein erfindungsgemäß eingesetztes Ersatzpaneel in besonderer Weise zum Einsatz beim erfindungsgemäßen Verfahren geeignet ist.

Die Einpassung und Verbindung des erfindungsgemäß zusammengesetzten Ersatzpaneels in die im Zuge des erfindungsgemäßen Verfahrens in den zu reparierende Flächenelement eingebrachten Öffnungsausschnitt erfolgt in an sich bekannter Weise nach demselben Muster wie bei den herkömmlich durchgeführten Reparaturverfahren, die in der eingangs genannten Broschüre angedeutet und dem Fachmann hinlänglich bekannt sind.

So kann die im Arbeitsschritt b) erzeugte Öffnung derart bemessen werden, dass ihre Länge einem ganzzahligen Vielfachen der jeweils von den Isolierlagen der Paneelsegmente des Ersatzpaneels eingenommenen Länge entspricht. Das Ersatzpaneel kann dann zwanglos in die Öffnung gesetzt werden, ohne dass dazu besondere Anpassungsarbeiten an dem Ersatzpaneel vorgenommen werden müssen.

Alternativ ist es selbstverständlich ebenso möglich, die Länge des Ersatzpaneels dadurch an die Länge der in das Flächenelement eingeschnittenen Öffnung anzupassen, dass mindestens eines der endseitig angeordneten Paneelsegmente des Ersatzpaneels derart gekürzt wird, dass die von den Isolierlagen der Paneelsegmente des Ersatzpaneels insgesamt eingenommene Länge der Länge der im Arbeitsschritt b) erzeugten Öffnung entspricht.

Aus den voranstehend schon erläuterten Gründen eignet sich die durch die Erfindung zur Verfügung gestellte Reparaturmethode insbesondere zur Reparatur von solchen Flächenelementen, bei denen mindestens eine der Decklagen des Flächenelements aus identisch geformten und bemessenen Segmenten zusammengesetzt ist, die sich in Längsrichtung des Flächenelements gemessen jeweils über eine Teillänge des Flächenelements erstrecken, wobei mindestens die in Längsrichtung gemessene Länge der Decklage der Paneelsegmente, die der so segmentierten Decklage des Flächenelements zugeordnet ist, einschließlich der jeweils vorhandenen Laschenabschnitte gleich der betreffenden Teillänge ist. Das erfindungsgemäß als Ersatz in das zu reparierende Flächenelement eingebrachte Ersatzpaneel weist dann eine an das Erscheinungsbild des Flächenelements im Originalzustand angepasste optische Erscheinung auf, ohne dass es dazu aufwändiger Maßnahmen bedarf.

Nachfolgend wird die Erfindung anhand einer ein Ausführungsbeispiel zeigenden Zeichnung näher erläutert. Deren Figuren zeigen jeweils schematisch und nicht maßstäblich:
- Fig. 1: ein Nutzfahrzeug in einer perspektivischen Ansicht;

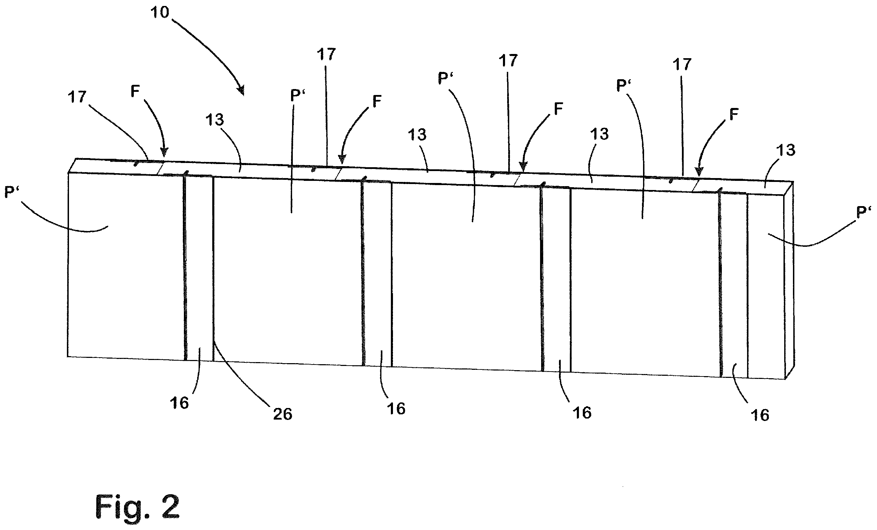

- Fig. 2: ein Ersatzpaneel in einer perspektivischen Ansicht;
- Fig. 3: eine erste Variante eines Paneelsegments in einer Ansicht von oben;
- Fig. 4: das in Fig. 3 dargestellte Paneelsegment in einer perspektivischen Ansicht;

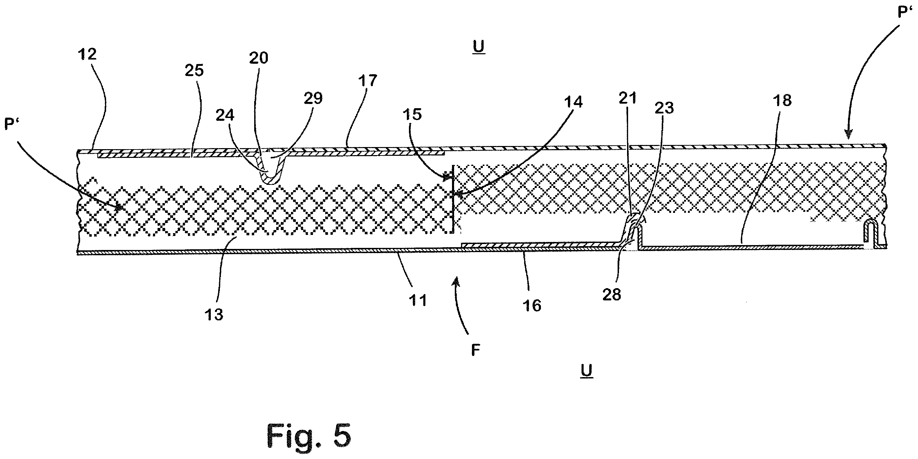

- Fig. 5: die Fügezone zwischen zwei aneinander stoßend angeordneten Paneelsegmenten des in Fig. 2 dargestellten Ersatzpaneels in einem Längsschnitt;

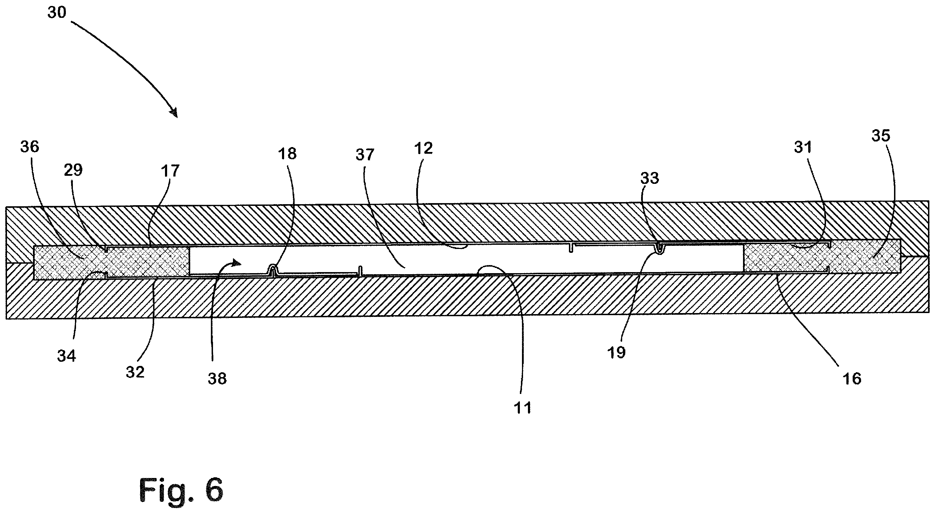

- Fig. 6: ein Werkzeug zum Herstellen des in Fig. 3 und 4 gezeigten Paneelsegments;
- Fig. 7: eine zweite Variante eines Paneelsegments in einer Ansicht von oben;
- Fig. 8: das in Fig. 4 dargestellte Paneelsegment in einer perspektivischen Ansicht.

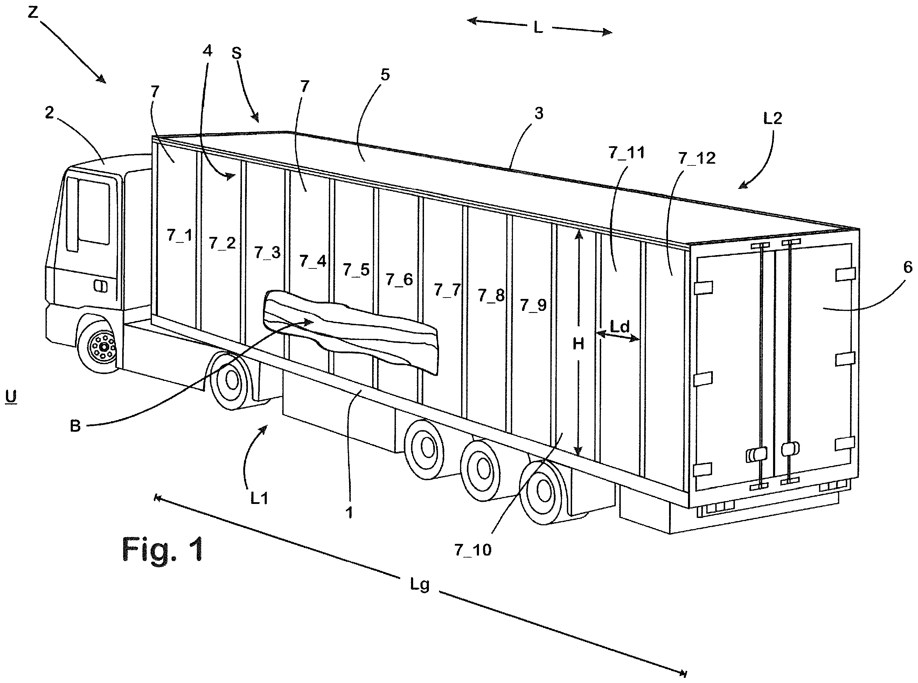

Der in Fig. 1 dargestellte, konventionell aufgebaute Sattelzug Z besteht aus einem hier als Nutzfahrzeug betrachteten Auflieger 1 und einer Zugmaschine 2, die den Auflieger 1 zieht.

Der Auflieger 1 umfasst einen Aufbau 3, der in an sich bekannter Weise (s. beispielsweise Sattelzüge mit in der oben genannten Broschüre aus dem Haus der Anmelderin aufgebauten Aufliegern) aus sich jeweils über die Längsseiten L1,L2 erstreckenden Seitenwandpaneelen 4, von denen in Fig. 1 nur das auf der in Fahrtrichtung gesehen linken Seite sichtbar ist, einem hier ebenfalls nicht sichtbaren, an der Stirnwand S des Aufbaus 3 angeordneten Stirnwandpaneel, einem Dachpaneel 5 und einer Rückwand 6 aufgebaut ist.

Beispielsweise die Seitenwandpaneelen 4 des Aufbaus 3 bilden dabei im Sinne der vorliegend erläuterten Erfindung jeweils ein Flächensegment des Aufbaus 3. Die Seitenwandpaneelen 4 des Aufbaus 3 sind in ebenso bekannter, in der oben genannten Broschüre beschriebener Weise aufgebaut. Dementsprechend weisen sie jeweils eine der Umgebung U des Aufbaus 3 zugeordnete äußere Decklage 7, eine dem vom Aufbau 3 umgrenzten Laderaum zugeordnete, hier nicht sichtbare innere Decklage und eine zwischen der äußeren Decklage 7 und inneren Decklage angeordnete, hier ebenfalls nicht dargestellte Isolierlage auf. Die äußere Decklage 7 und die innere Decklage sind dabei in an sich ebenso aus der genannten Broschüre bekannter Weise mehrschichtig aufgebaut, um einerseits die geforderte Formsteifigkeit und andererseits eine ausreichende Dichtheit und optimale optische Erscheinung zu gewährleisten. Die Isolierlage ist dagegen aus einem thermisch isolierenden Schaum gebildet, der bei der Herstellung zwischen die dabei in einem vorgegebenen Abstand gehaltenen Decklagen geschäumt worden ist. Die Dicke der Isolierlage ist dabei wesentlich größer als die Dicke der Decklagen.

Im Hinblick auf eine vereinfachte Fertigung und eine einfache Instandsetzung im Fall einer Beschädigung sind die innere Decklage und die äußere Decklage 7 der Seitenwandpaneelen 4 in Segmente 7_1 - 7_12 unterteilt, die sich jeweils über die Höhe des jeweiligen Seitenwandpaneels 4 erstrecken. Die in Längsrichtung L des Aufbaus 3 gemessene Länge der Segmente 7_1 - 7_12 der äußeren Decklage 7 entspricht dabei beispielsweise jeweils einem Zwölftel der von der Decklage 7 des Seitenwandpaneels 4 eingenommenen Gesamtlänge Lg.

Soll am Seitenwandpaneel 4 eine Beschädigung B repariert werden, die sich über die Segmente 7_3 bis 7_7 der Decklage 7 erstreckt, wird ein Ersatzpaneel 10 bereitgestellt, das aus fünf einzeln vorgefertigen geformten Paneelsegmenten P' oder P" zusammengestellt ist.

Die Paneelsegmente P';P" umfassen jeweils zwei beabstandet zueinander angeordnete Decklagen 11,12;41,42 und eine Isolierlage 13;43; die den Abstand zwischen den Decklagen 11,12;41,42 füllt. Die Decklagen 11,12;41,42 sind jeweils genauso aufgebaut wie die äußere Decklage 7 und die innere Decklage des Seitenwandpaneels 4. Ebenso besteht die Isolierlage 13;43 der Paneelsegmente P';P" aus demselben thermisch isolierenden Schaum wie die Isolierlage des Seitenwandpaneels 4. Gleichzeitig entspricht der Abstand der Decklagen 11,12;41,42 der Paneelsegmente P',P" dem Abstand der Decklagen des Seitenwandpaneels 4, so dass auch die Gesamtdicke D der Paneelsegmente P',P" gleich der Gesamtdicke des Seitenwandpaneels 4 ist. Die Länge Li der Isolierlage 13;43 der Seitenwandsegmente P',P" entspricht zudem der Länge Ld der einzelnen Decklagensegmente 7_1 - 7_12.

Die Isolierlage 13;43 der Paneelsegmente P',P" ist quaderförmig mit parallel zueinander ausgerichteten, in Längsrichtung L gegenüberliegend angeordneten Fügeseiten 14,15;44,45 ausgebildet.

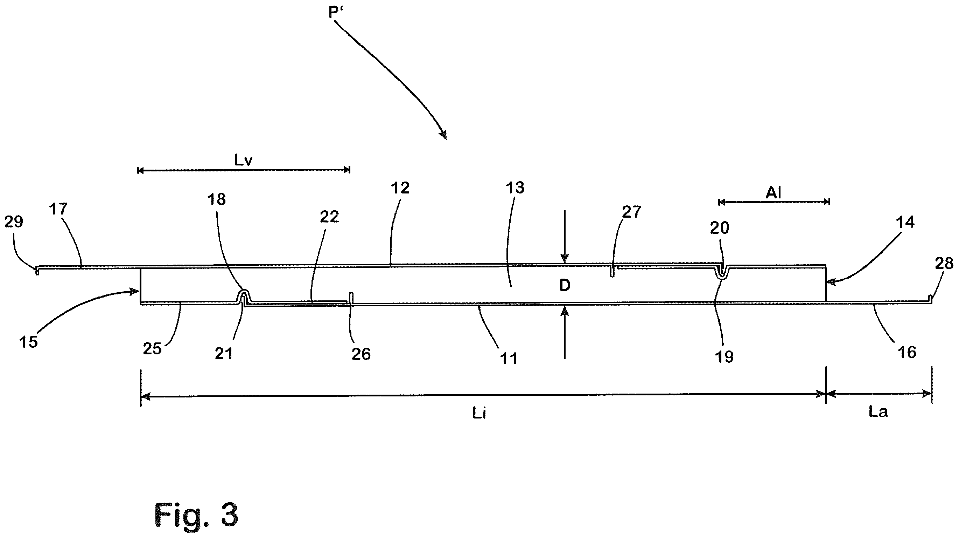

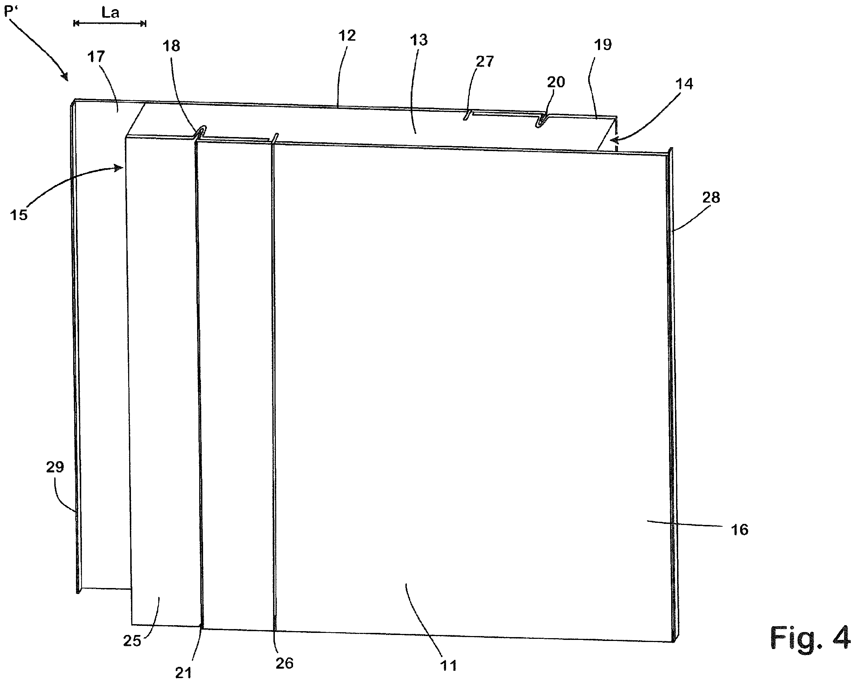

Bei der hier mit P' bezeichneten, in den Figuren 3 und 4 gezeigten Variante der Paneelsegmente P',P" ist an die Decklagen 11,12 jeweils ein Laschenabschnitt 16,17 angeformt.

Der Laschenabschnitt 16 der Decklage 11 steht dabei in Längsrichtung L gesehen über die Fügeseite 14 der Isolierlage 13, wogegen der Laschenabschnitt 17 der anderen Decklage 12 an der gegenüberliegenden Seite über die Fügeseite 15 hinaussteht.

Jeweils in Längsrichtung L betrachtet endet gleichzeitig die Decklage 11 mit einem Abstand AI vor der Fügeseite 15, der bis auf ein für eine einfache Montage vorgesehenes geringes Übermaß gleich der Länge La ist, mit der der Laschenabschnitt 16 über die Fügeseite 14 vorsteht. Genauso endet die andere Decklage 12 des Paneelsegments P' mit dem Abstand AI vor der Fügeseite 14 und steht mit ihrem Laschenabschnitt 17 mit der Länge La über die Fügeseite 15 der Isolierlage 13 hinaus.

Um die formsteife und feste Anbindung der Paneelsegmente P' zu untersützen, ist im jeweils nicht von den Decklagen 11,12 bedeckten Bereich der Isolierlage 13 jeweils ein Verstärkungselement 18,19 angeordnet. Die Verstärkungselemente 18,19 sind aus einem Blechstreifen geformt und erstrecken sich über die gesamte Höhe H des Paneelsegments P'. Dabei ist in die Verstärkungselemente 18,19 jeweils eine Sicke 20,21 eingeformt, die bezogen auf die in Längsrichtung L gemessene Länge Lv der Verstärkungselemente 18,19 mittig angeordnet ist und sich ebenfalls über die Höhe H erstreckt.

Mit ihrem einen Schenkel 22 liegen die Verstärkungselemente 18,19 an der der Isolierlage 13 zugeordneten Seite der ihnen jeweils zugeordneten Decklage 11,12 an und sind dort mit der betreffenden Decklage 11,12 fest verklebt.

Dabei sind die Verstärkungselemente 18,19 jeweils so ausgerichtet, dass eine an den ihnen zugeordneten Rand der jeweiligen Decklage 11,12 angeformte Abkröpfung 23,24 in die Sicke 20,21 des jeweiligen Verstärkungselements 18,19 greift. Die Abkröpfungen 23,24 sind dabei nach Art einer Kehle geformt, die annähernd rechtwinklig von der jeweiligen Decklage 11,12 in Richtung der Isolierlage 13 absteht, wobei die durch die Abkröpfung 23,24 gebildete Kehle zur Umgebung U offen ist.

Der andere Schenkel 25 der Verstärkungselemente 18,19 stößt dabei gegen die zugeordnete Fügeseite 14,15, so dass die Verstärkungselemente 18,19 im nicht von den Decklagen 11,12 abgedeckten Bereich bündig in die Isolierlage 13 eingelassen sind und ihren Abschluss in dem betreffenden Bereich bilden.

Sofern beim zu reparierenden Seitenwandpaneel 4 entsprechende Sicken vorgesehen sind, können optional in die Decklagen 11,12 in einem entsprechenden Abstand von der jeweiligen Abkröpfung 23,24 jeweils eine zusätzliche, sich über die Höhe H erstreckende Sicke 26,27 eingeformt sein. Auf diese Weise erhält das aus den Paneelsegmenten P' zusammengesetzte Ersatzpaneel 10 im Bereich der Fügezonen F, in denen jeweils benachbart zueinander angeordnete Paneelsegmente P' gegeneinander stoßen, dieselbe optische Anmutung wie beim Seitenwandpaneel 4 in dem Bereich, in dem die Decklagensegmente 7_1 7_12 gefügt sind.

An die Laschenabschnitte 16,17 der Decklagen 11,12 ist ebenfalls jeweils eine Abkröpfung 28,29 angeformt. Die Abkröpfungen 28,29 sind dabei nach Art einer einfachen Abkantung ausgebildet, so dass ein Randstreifen der jeweiligen Decklage 11,12 in etwa rechtwinklig gegen die jeweils gegenüberliegende Seite des Paneelsegments P' gerichtet ist und sich von oben gesehen (Fig. 3) eine hakenförmige Gestalt der Laschenabschnitte 16,17 ergibt.

In Draufsicht auf ihre Oberseite weisen die Paneelsegmente P' somit eine insgesamt punktsymmetrische Anordnung der voranstehend erläuterten Bau- und Formelemente auf.

Für die Montage des Ersatzpaneels 10 werden fünf identische Paneelsegmente P' bereitgestellt und nebeneinander derart aufgereiht, dass die Isolierlagen 13 der jeweils benachbart zueinander angeordneten Paneelsegmente P' mit ihren einander zugeordneten Fügeseiten 14,15 gegeneinander stoßend ausgerichtet sind. Dabei sind die freien Oberseiten der Schenkel 25 der Verstärkungselemente 18,19, die Fügeseiten 14,15 und/oder die der Isolierlage 13 zugewandten Flächen der Laschenabschnitte 16,17 mit Klebstoff bestrichen.

Optional kann ebenso Klebstoff in die jeweilige Sicke 20,21 gefüllt sein.

Die aneinanderstoßenden Paneelsegmente P' werden dabei so gefügt, dass die hakenförmige Abkröpfung 28,29 der Laschenabschnitte 16,17 in die kehlenförmige Abkröpfung 23,24 der zugeordneten Verstärkungselemente 18,19 greifen und in den dort optional vorhandenen Klebstoff tauchen. Durch die einander greifenden Abkröpfungen 28/23 und 29/24 ist in Längsrichtung L eine formschlüssige Verkopplung der Paneelsegmente P' erreicht, durch die eine ordnungsgemäße Ausrichtung der Paneelsegmente P' während des Aushärtens der Klebeverbindung gewährleistet ist.

Soll verhindert werden, dass Klebstoff aus dem Bereich der Sicken 20,21 austritt, kann hierzu in die jeweilige Sicke 20,21 ein Dichtelement, wie ein Streifen oder eine Schnur aus einem zur Abdichtung geeigneten Material, eingelegt werden, gegen die beispielsweise jeweils die in die kehlenförmige Abkröpfung 23,24 greifende hakenförmige Abkröpfung 28,29 wirkt. Für die Reparatur wird der Abschnitt des Seitenwandpaneels 4, in dem sich die Beschädigung B befindet, über die Höhe H aus dem Seitenwandpaneel 4 herausgetrennt. Anschließend werden die beiden außen angeordneten Paneelsegmente P' erforderlichenfalls so gekürzt, dass die Länge des Ersatzpaneels 10 und die Ausrichtung der Sicken 23,24 sowie der optional vorhandenen Sicken 26,27 an die Lage der Sicken der Decklage 7 des Seitenwandpaneels 4 im Originalzustand angepasst ist.

Das Ersatzpaneel 10 kann dann in konventioneller Weise in die zuvor erstellte Öffnung des Seitenwandpaneels 4 eingepasst und dort in ebenso konventioneller Weise befestigt werden. Genauso konventionell werden dann erforderlichenfalls die Übergangszonen zwischen den bestehen gebliebenen Abschnitten des Seitenwandpaneels 4 und dem Ersatzpaneel 10 nachgearbeitet, bis das Seitenwandpaneel 4 wieder seine ursprüngliche optische Erscheinung und technische Funktion hat.

Zur Herstellung der einzelnen Paneelsegmente P' werden die Decklagen 11,12 mit den mit ihnen verklebten Verstärkungselementen 18,19 in einem Schäumerwerkzeug 30 in dem vorgesehenen Abstand zueinander so positioniert, wie es ihrer Anordnung am fertigen Paneelsegment P' entspricht. Zusätzlich werden nach Art von Verbindungsspangen ausgebildete Hilfsbleche 31,32 in das Werkzeug 30 gelegt. Die Hilfsbleche 31,32 sind an ihren Längsrändern jeweils mit einer den Abkröpfungen 28,29 entsprechenden hakenförmigen Abkröpfungen 33,34 versehen und werden so positioniert, dass sie mit jeweils einer Abkröpfung 33 in die kehlenförmige Abkröpfung 23,24 der jeweils zugeordneten Decklage 11,12 greifen. Gleichzeitig ist ihre Länge so bemessen, dass ihre andere Abkröpfung 34 gegenüberliegend zu und in Richtung von der hakenförmigen Abkröpfung 28,29 der jeweils gegenüber liegend angeordneten Decklage 11,12 angeordnet ist. Die Hilfsbleche 31,32 sind dabei mit einem Trennmittel beschichtet, das verhindert, dass der anschließend in das Werkzeug 30 eingebrachte, die Isolierlage 13 bildende Isolierschaum an ihnen haftet. In dem Bereich, in dem die Laschenabschnitte 16,17 an den Decklagen 11,12 ausgebildet werden sollen, ist jeweils seitlich ein Blindstück 35,36 angeordnet. Die Blindstücke 35,36 weisen an ihren gegenüberliegenden Seiten jeweils eine Sicke auf, wobei in die eine Sicke die hakenförmige Abkröpfung 28,29 der jeweiligen Decklage 11,12 und in die gegenüberliegende Sicke die zugeordnete Abkröpfung 34 des jeweiligen Hilfsblech 31,32 greift. Auch die Blindstücke 35,36 sind mit einem Trennmittel beschichtet, das ein Anhaften des Schaums der Isolierlage 13 verhindert.

In den im so vorbereiteten Werkzeug an seinen Längsseiten von den Decklagen 11,12 mit den Verstärkungselementen 18,19, an seinen Schmalseiten von den Blindstücken 35,36 und an seiner Ober- und Unterseite jeweils durch die Wandung 37 des Werkzeugs 30 begrenzten Hohlraum 38 wird nun in an sich bekannter Weise der thermisch isolierende Schaum gefüllt. Dieser expandiert und füllt so den Hohlraum 38 mit der Isolierlage 13. Nach der vollständigen Aushärtung des Schaums wird das Werkzeug 30 geöffnet. Dann werden die Hilfsbleche 31,32 sowie die Blindstücke 35,36 entnommen. Daraufhin kann das fertige Paneelsegment P' entnommen werden.

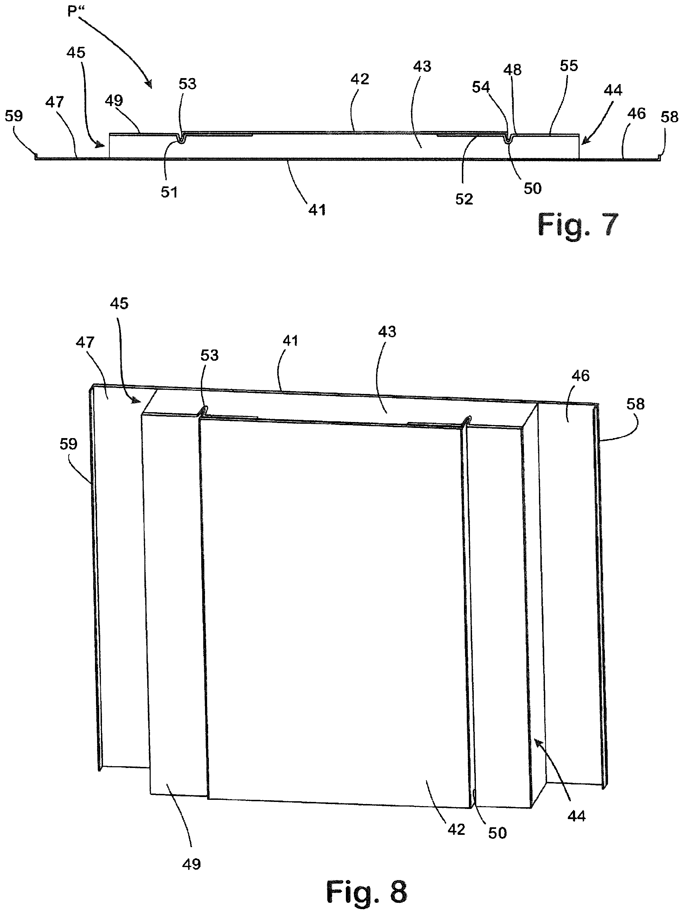

Bei der hier mit P" bezeichneten, in den Figuren 7 und 8 gezeigten Variante der Paneelsegmente P',P" sind an die Decklage 41 zwei Laschenabschnitte 46,47 angeformt, von denen der eine Laschenabschnitt 16 über die Fügeseite 44 und der andere über die Fügeseite 45 der Isolierlage 43 des Paneelsegments P" hinausragt. Die Abmessungen und die Formgebung der Laschenabschnitte 46,47 entsprechen einschließlich der an ihnen jeweils ausgebildeten hakenförmigen Abkröpfung 58,59 der Form der Laschenabschnitte 16,17 mit den an ihnen ausgebildeten Abkröpfungen 28,29.

Die andere Decklage 42 des Paneelsegments P" endet dagegen mit einem dem Abstand AI entsprechenden Abstand vor der Kante der jeweiligen Fügeseite 44,45. Auch hier ist in die Isolierlage im von der Decklage 42 nicht überdeckten Abschnitt der eine Schenkel 55 jeweils eines Verstärkungselements 48,49 angeordnet, das wie die Verstärkungselemente 18,19 angeordnet, mit einer Sicke 50,51 versehen und mit der zugeordneten Decklage 42 verbunden ist.

In Draufsicht auf ihre Oberseite weisen die Paneelsegmente P" somit eine insgesamt spiegelsymmetrische Anordnung ihrer voranstehend erläuterten Bau- und Formelemente auf.

Dementsprechend kann aus ihnen ein Ersatzpaneel gebildet werden, in dem eine ausreichende Anzahl von Paneelsegmenten P" so ausgereiht werden, dass abwechselnd ein Paneelsegment P" mit der Umgebung U zugeordneten Laschenabschnitten 46,47 neben einem Paneelsegment P" angeordnet ist, dessen Laschenabschnitte 46,47 dem Laderaum des Aufbaus 3 zugeordnet sind. Die Verklebung in den sich dabei zwischen den aneinander stoßenden Paneelsegmenten P" ergebenden Fügezonen erfolgt in derselben Weise wie für das Ersatzpaneel 10 beschrieben. Ebenso lassen sich die Paneelsegmente P" in zur Herstellung der Paneelsegmente P' analoger Weise erzeugen.

### BEZUGSZEICHEN

- 1: Auflieger (Nutzfahrzeug)
- 2: Zugmaschine
- 3: Aufbau des Aufliegers
- 4: Seitenwandpaneele (Flächenelement)
- 5: Dachpaneel des Aufbaus 3
- 6: Rückwand des Aufbaus 3
- 7: äußere Decklage des Seitenwandpaneels 4
- 7_1 - 7_12: Segmente der äußeren Decklage 7
- 10: Ersatzpaneel
- 11,12;41,42: Decklage der Paneelsegmente P'
- 13;43: Isolierlage der Paneelsegmente P'
- 14,15;44,45: Fügeseiten
- 16,17;46,47,: Laschenabschnitte
- 18,19;48,49: Verstärkungselemente
- 20,21;50,51: Sicken
- 22,25;52,55: Schenkel der Verstärkungselemente 18,19 bzw. 48,49
- 23,24;53,54: kehlenartige Abkröpfung
- 26,27: Sicken
- 28,29;58,59: hakenförmige Abkröpfung
- 30: Schäumerwerkzeug
- 31,32: Hilfsbleche (Verbindungsspangen)
- 33,34: hakenförmige Abkröpfungen
- 35,36: Blindstück
- 37: Wandung des Werkzeugs 30
- 38: die Isolierlage abformender Hohlraum

- AI: Abstand
- B: Beschädigung
- D: Gesamtdicke der Paneelsegmente P',P"
- F: Fügezonen
- H: Höhe der Paneelsegmente P',P" und des Seitenwandpaneels 4
- L1,L2: Längsseiten des Aufbaus 3
- L: Längsrichtung
- La: Länge
- Ld: Einzellänge der Decklagensegmente 7_1 - 7_12
- Lg: Gesamtlänge des Seitenwandpaneels 4
- Li: Länge der Isolierlage 13
- Lv: Länge
- P';P": Paneelsegmente
- S: Stirnwand des Aufbaus 3
- U: Umgebung
- Z: Sattelzug

## Patentansprüche

1. Verfahren zum Instandsetzen eines beschädigten Flächenelements (4) eines Aufbaus (3) eines Nutzfahrzeugs (1), wobei das Flächenelement (4) zwei mit Abstand zueinander angeordnete Decklagen (11,12;41,42) aus einem formsteifen Material und eine Isolierlage (13;43) aus einem thermisch isolierenden Material aufweist, das den Abstand zwischen den Decklagen (11,12;41,42) füllt, umfassend folgende Arbeitsschritte:
a) Heraustrennen des Abschnitts des Flächenelements (4), über den sich die Beschädigung (B) erstreckt, wobei das Heraustrennen derart erfolgt, dass der beschädigte Abschnitt vollständig aus dem Flächenelement (4) entfernt wird und nach dem Heraustrennen an Stelle des herausgetrennten Abschnitts eine Öffnung vorhanden ist,
b) Einsetzen eines Ersatzpaneels (10) in die im Arbeitsschritt a) erzeugte Öffnung, wobei die Abmessungen des Ersatzpaneels (10) derart an die Abmessungen der Öffnung angepasst sind, dass nach dem Einsetzen die Öffnung durch das Ersatzpaneel (10) vollständig geschlossen ist und das Ersatzpaneel (10) in jeweils einer Fügezone an die angrenzenden Abschnitte des Flächenelements (4) angeschlossen ist, wobei die Ersatzpaneele (10) mit einander zugeordneten Fügeseiten (14,15,44,45) gegeneinander stoßend ausgerichtet sind,
c) Befestigen des Ersatzpaneels (10) in der Öffnung,
**dadurch gekennzeichnet,**
**dass** eine Anzahl von identisch geformten und bemessenen Paneelsegmenten (P';P") bereitgestellt wird, die jeweils zwei mit Abstand
zueinander angeordnete Decklagen (11,12;41,42) und eine den Abstand zwischen den Decklagen (11,12;41,42) füllende Isolierlage (13;43) umfassen, wobei an mindestens eine der Decklagen (11,12;41,42) der Paneelsegmente (P',P") ein Laschenabschnitt (16,17;46,47) angeformt ist, **dass** für die Herstellung des Ersatzpaneels (10) zwei oder mehr dieser Paneelsegmente (P';P") mit ihren Fügeseiten (14,15;44,45) aneinander stoßend aufgereiht werden, so dass die Laschenabschnitte (16,17,46,47) von aneinander angrenzend angeordneten Paneelsegmenten (P';P") die Isolierlage (13;43) des jeweils angrenzenden Paneelsegments (P';P") überlappend auf diesem Paneelsegment (P';P") aufliegen.
und **dass** die Ersatzpaneele derart zusammengestellt sind, dass ihre Isolierlagen (13;43) mit ihren einander zugeordneten Fügeseiten (14,15;44,45) gegeneinander stoßend ausgerichtet sind, und
**dass** die in der so gebildeten Aufreihung benachbart zueinander angeordneten Paneelsegmente (P';P") über die Laschenabschnitte (16,17,46,47) fest miteinander zu dem Ersatzpaneel (10) verbunden werden.

2. Verfahren nach Anspruch 1, **dadurch gekennzeichnet, dass** jeweils mindestens eine der Decklagen (11,12;41,42) der Paneelsegmente (P';P") mit jeweils einem Laschenabschnitt über die Fügeseiten (14,15;44,45) der Isolierlage (13;43) des jeweiligen Paneelsegments (P';P") hinaussteht, wogegen die andere Decklage (12,11) des betreffenden Paneelsegments (P';P") vor oder an dieser Fügeseite seiner Isolierlage (13;43) endet.

3. Verfahren nach Anspruch 2, **dadurch gekennzeichnet, dass** die erste Decklage (11) mindestens eines der Paneelsegmente (P') mit einem ersten Laschenabschnitt (16,17) über die eine Fügeseite (14) der Isolierlage (13) hinaussteht, wogegen sie an ihrer gegenüberliegenden Seite an oder vor der dort vorhandenen Fügeseite (15) der Isolierlage (13;43) des jeweiligen Paneelsegments (P';P") endet, wogegen die zweite Decklage (12) der Paneelsegmente (P') mit einem Laschenabschnitt (16,17;46,47) jeweils über diese Fügeseite (15) der Isolierlage (13;43) hinaussteht und die zweite Decklage (12) an ihrer gegenüberliegenden anderen Seite vor oder an der Fügeseite (14) der Isolierlage (13;43) endet, die dem Laschenabschnitt (16,17;46,47) der ersten Decklage (11) des betreffenden Paneelsegments (P';P") zugeordnet ist.

4. Verfahren nach Anspruch 2, **dadurch gekennzeichnet, dass** die erste Decklage (41) mindestens eines der Paneelsegmente (P") mit einem ersten Laschenabschnitt (46) über die eine Fügeseite (44) und mit einem zweiten Laschenabschnitt (47) über die zweite Fügeseite (45) der Isolierlage (43) des jeweiligen Paneelsegments (P") hinaussteht, wogegen die zweite Decklage (42) mit ihren den Fügeseiten (44,45) der Isolierlage (13;43) des jeweiligen Paneelsegments (P';P") zugeordneten Seiten jeweils an oder vor der zugeordneten Fügeseite der Isolierlage (13;43) endet.

5. Verfahren nach Anspruch 3 oder 4, **dadurch gekennzeichnet, dass** die Decklagen (11,12;41,42) an den Seiten, an denen sie keinen Laschenabschnitt (16,17;46,47) tragen, mit einem in Längsrichtung (L) gemessenen Abstand (AI) vor der zugeordneten Fügeseite der Isolierlage (13;43) enden, der höchstens dem in Längsrichtung (L) gemessenen Abstand (La) entspricht, über den die vorhandenen Laschenabschnitte (16,17;46,47) der Decklagen (11,12;41,42) über die zugeordnete Fügeseite der Isolierlage (13;43) hinausstehen.

6. Verfahren nach Anspruch 5, **dadurch gekennzeichnet, dass** mindestens eines der Paneelsegmente (P';P") in dem Bereich, in dem seine Isolierlage (13;43) vom Laschenabschnitt (16,17;46,47) des angrenzend angeordneten Paneelsegments (P';P") überdeckt ist, ein in die Isolierlage (13;43) des Paneelsegments (P';P") eingelassenes und unter die zugeordnete Decklage (11,12;41,42) des Paneelsegments (P';P") reichendes Verstärkungselement (18,19;48,49) umfasst.

7. Verfahren nach Anspruch 6, **dadurch gekennzeichnet, dass** das Verstärkungselement (18,19;48,49) ein Blechteil ist, welches in Bezug auf die Fläche der Isolierlage (13;43), auf der die eine der Decklagen (11,12;41,42) aufliegt, flächenbündig in die betreffende Isolierlage (13;43) eingelassen ist.

8. Verfahren nach einem der voranstehenden Ansprüche, **dadurch gekennzeichnet, dass** die aneinander angrenzend angeordneten Paneelsegmente (P';P") miteinander durch eine Verklebung im Überlappungsbereich zwischen dem jeweiligen Paneelsegment (P';P") und dem auf ihm aufliegenden Laschenabschnitt (16,17;46,47) des angrenzend angeordneten Paneelsegments (P';P") verbunden werden.

9. Verfahren nach einem der voranstehenden Ansprüche, **dadurch gekennzeichnet, dass** die Laschenabschnitte (16,17;46,47) der Paneelsegmente (P';P") an ihrer freien Stirnseite hakenförmig abgekröpft sind und **dass** die Decklagen (11,12;41,42) der Paneelsegmente (P';P") an ihren den Fügeseiten (14,15;44,45) der Isolierlage (13;43) zugeordneten Seiten, an denen sie keinen Laschenabschnitt (16,17;46,47) tragen, mit einer Sicke (20,21;50,51) versehen sind, in die der Laschenabschnitt (16,17;46,47) des angrenzend angeordneten Paneelsegments (P';P") formschlüssig greift.

10. Verfahren nach Anspruch 9, **dadurch gekennzeichnet, dass** im Bereich der Sicke (20,21;50,51) ein Dichtelement vorgesehen ist.

11. Verfahren nach einem der voranstehenden Ansprüche, **dadurch gekennzeichnet, dass** die im Arbeitsschritt b) erzeugte Öffnung derart bemessen wird, dass ihre Länge einem ganzzahligen Vielfachen der jeweils von den Isolierlagen (13;43) der Paneelsegmente (P';P") eingenommenen Länge (Ld) entspricht.

12. Verfahren nach einem der voranstehenden Ansprüche, **dadurch gekennzeichnet, dass** die Länge mindestens eines der endseitig angeordneten Paneelsegmente (P';P") des Ersatzpaneels (10) derart gekürzt wird, dass die von den Isolierlagen (13;43) der Paneelsegmente (P';P") des Ersatzpaneels (10) insgesamt eingenommene Länge der Länge der im Arbeitsschritt b) erzeugten Öffnung entspricht.

13. Verfahren nach einem der voranstehenden Ansprüche, **dadurch gekennzeichnet, dass** mindestens eine der Decklagen (11,12;41,42) des Flächenelements (4) aus identisch geformten und bemessenen Segmenten (7_1 - 7_12) zusammengesetzt ist, die sich in Längsrichtung (L) des Flächenelements (4) gemessen jeweils über eine Teillänge des Flächenelements (4) erstrecken, und **dass** mindestens die in Längsrichtung (L) gemessene Länge (La) der Decklage (11,12:41,42) der Paneelsegmente (P',P"), die der so segmentierten Decklage des Flächenelements (4) zugeordnet ist, einschließlich der jeweils vorhandenen Laschenabschnitte gleich der betreffenden Teillänge ist.

## Claims

1. Method for repairing a damaged surface element (4) of a structure (3) of a commercial vehicle (1), wherein the surface element (4) comprises two cover layers (11, 12; 41, 42) spaced apart from each other made of a dimensionally stable material and an insulating layer (13; 43) made of a thermally insulating material which fills the space between the cover layers (11, 12; 41, 42), comprising the following steps:
a) separating out the portion of the surface element (4), over which the damage (B) extends, wherein the separating out takes place such that the damaged portion is completely removed from the surface element (4) and after separation in place of the cut-out section an opening is present;
b) inserting a replacement panel (10) in the opening produced in step a), wherein the dimensions of the replacement panel (10) are adapted to the dimensions of the opening, such that after insertion the opening is completely closed by the replacement panel (10), and the replacement panel (10) in each case in a joining zone is connected to the adjacent sections of the surface element (4), wherein the replacement panels (10) are aligned with associated joining sides (14, 15; 44, 45) abutting one another;
c) securing the replacement panel (10) in the opening,
**characterised in**
**that** a number of identically shaped and sized panel segments (P'; P") is provided, each of which has two cover layers (11, 12; 41, 42) spaced apart from one another and an insulating layer (13; 43) filling the space between the cover layers (11, 12; 41, 42), wherein on at least one of the cover layers (11, 12; 41, 42) of the panel segments (P', P") a tab section (16, 17; 46, 47) is formed,
in that for the production of the replacement panel (10) two or more of these panel segments (P', P") are strung together with their joining sides (14, 15; 44, 45) abutting one another, so that the tab sections (16, 17; 46, 47) of adjacently arranged panel segments (P'; P") rest on this panel segment (P', P") overlapping the insulating layer (13; 43) of the respectively adjacent panel segment (P'; P"), and
in that the replacement panels are assembled so that their insulating layers (13; 43) are aligned with their associated joining sides (14,15; 44,45) abutting one another, and
in that the panel segments (P'; P") adjacent to one another in the arrangement thus formed are firmly connected together via the tab sections (16, 17; 46, 47) to form the replacement panel (10).

2. Method according to claim 1, **characterised in that** in each case at least one of the cover layers (11, 12; 41, 42) of the panel segments (P'; P") protrudes with one tab section in each case over the joining sides (14, 15; 44, 45) of the insulating layer (13; 43) of the respective panel segment (P'; P"), whereas the other cover layer (12, 11) of the panel segment (P'; P") concerned ends before or at this joining side of its insulating layer (13; 43).

3. Method according to claim 2, **characterised in that** the first cover layer (11) of at least one of the panel segments (P') projects with a first tab section (16, 17) beyond the one joining side (14) of the insulating layer (13), whereas at its opposite end it ends on or before the joining side (15) present there of the insulating layer (13; 43) of the respective panel segment (P'; P "), whereas the second cover layer (12) of the panel segments (P') projects with a tab section (16, 17; 46, 47) beyond this joining side (15) of the insulating layer (13; 43) and the second cover layer (12) on its opposite other side ends before or at the joining side (14) of the insulating layer (13; 43) associated with the tab section (16, 17; 46, 47) of the first cover layer (11) of the respective panel segment (P', P").

4. Method according to claim 2, **characterised in that** the first cover layer (41) of at least one of the panel segments (P") projects with a first tab section (46) beyond the one joining side (44) and with a second tab section (47) beyond the second joining side (45) of the insulating layer (43) of the respective panel segment (P"), whereas the second cover layer (42) ends with its sides associated with the joining sides (44, 45) of the insulating layer (13; 43) of the respective panel segment (P'; P") in each case at or before the associated joining side of the insulating layer (13; 43).

5. Method according to claim 3 or 4, **characterised in that** the cover layers (11,12; 41,42) on the sides where they do not support a tab section (16, 17; 46, 47) end with a space (AI) measured in the longitudinal direction (L) before the associated joining side of the insulating layer (13; 43) which corresponds at most to the space (La) measured in the longitudinal direction (L) over which the existing tab sections (16, 17; 46, 47) of the cover layers (11, 12; 41, 42) protrude beyond the associated joining side of the insulating layer (13, 43).

6. Method according to claim 5, **characterised in that** at least one of the panel segments (P'; P") in the region in which its insulating layer (13; 43) is covered by the tab section (16,17; 46, 47) of the adjacently arranged panel segment (P'; P"), comprises a reinforcing element (18, 19; 48, 49) embedded in the insulating layer (13; 43) of the panel segment (P'; P") and extending under the associated cover layer (11,12; 41,42) of the panel segment (P'; P").

7. Method according to claim 6, **characterised in that** the reinforcing element (18, 19; 48, 49) is a sheet-metal part which, with respect to the surface of the insulating layer (13; 43) on which the one of the cover layers (11, 12; 41, 42) rests, is embedded flush with the surface in the respective insulating layer (13; 43).

8. Method according to any one of the preceding claims, **characterised in that** the adjacently arranged panel segments (P'; P") are joined together by an adhesive bonding in the overlap region between the respective panel segment (P'; P") and the tab section (16,17; 46,47) of the adjacently arranged panel segment (P'; P") resting on this.

9. Method according to one of the preceding claims, **characterised in that** the tab sections (16, 17; 46, 47) of the panel segments (P', P") are bent in a hook-shaped manner on their free end side and **in that** the cover layers (11, 12; 41, 42) of the panel segments (P', P") are provided on their sides associated with the joining sides (14, 15; 44, 45) of the insulating layer (13; 43), on which they have no tab section (16,17; 46,47), with a bead (20, 21; 50, 51) which engages positively with the tab section (16, 17; 46, 47) of the adjacently arranged panel segment (P'; P").

10. Method according to claim 9, **characterised in that** in the region of the bead (20, 21; 50, 51) a sealing element is provided.

11. Method according to any one of the preceding claims, **characterised in that** the opening produced in step b) is dimensioned such that its length is an integral multiple of the length (Ld) occupied in each case by the insulating layers (13; 43) of the panel segments (P'; P").

12. Method according to any one of the preceding claims, **characterised in that** the length of at least one of the end-mounted panel segments (P', P") of the replacement panel (10) is shortened such that the total length occupied by the insulation layers (13; 43) of the panel segments (P', P") of the replacement panel (10) corresponds to the length of the opening produced in step b).

13. Method according to any one of the preceding claims, **characterised in that** at least one of the cover layers (11, 12; 41, 42) of the surface element (4) is composed of identically shaped and dimensioned segments (7_1 - 7_12) extending in the longitudinal direction (L) of the surface element (4) measured in each case over a partial length of the surface element (4), and **in that** at least the length (La) measured in the longitudinal direction (L), of the cover layer (11,12; 41,42) of the panel segments (P', P"), which is associated with the cover layer of the surface element (4) segmented in this way, including the tab sections present in each case, is equal to the respective partial length.

## Revendications

1. Procédé de réparation d'un élément de surface (4) endommagé d'une structure (3) d'un véhicule automobile (1), l'élément de surface (4) présentant deux couches de revêtement (11, 12; 41, 42) agencées espacées l'une de l'autre composées d'un matériau de forme rigide, et une couche isolante (13 ; 43) composée d'un matériau thermiquement isolant qui remplit l'espacement entre les couches de revêtement (11, 12; 41, 42), comportant les étapes de travail suivantes :
a) la découpe de la section de l'élément de surface (4) sur laquelle s'étend l'endommagement (B), la découpe s'effectuant de sorte à éliminer entièrement la section endommagée de l'élément de surface (4) et après la découpe une ouverture est présente à la place de la section découpée,
b) l'introduction d'un panneau de remplacement (10) dans l'ouverture produite dans l'étape de travail a), les dimensions du panneau de remplacement (10) étant adaptées aux dimensions de l'ouverture de sorte que, après l'introduction, l'ouverture est entièrement fermée par le panneau de remplacement (10) et le panneau de remplacement (10) est raccordé, dans respectivement une zone de jonction, à la section adjacente de l'élément de surface (4), les panneaux de remplacement (10) étant alignés butant l'un contre l'autre avec des zones de jonction (14, 15, 44, 45) associées,
c) la fixation du panneau de remplacement (10) dans l'ouverture,
**caractérisé en ce que**,
l'on fournit un nombre de segments de panneau (P' ; P") mesurés et formés de manière identique, lesquels comportent respectivement deux couches de revêtement (11, 12 ; 41, 42) agencées espacées l'une de l'autre et une couche isolante (13 ; 43) remplissant l'espacement entre les couches de revêtement (11, 12; 41, 42), une section de languette (16, 17 ; 46, 47) étant formée sur au moins une des couches de revêtement (11, 12 ; 41, 42) des segments de panneau (P', P"), pour la fabrication du panneau de remplacement (10) deux ou plusieurs de ces segments de panneau (P' ; P") avec leurs zones de jonction (14, 15 ; 44, 45) sont alignés butant l'un contre l'autre, de sorte que les sections de languettes (16, 17; 46, 47) des segments de panneau (P' ; P"), lesquels sont agencés côte à côte, reposent sur le panneau de segment étant adjacent à celles-ci, et recouvrent ainsi la couche isolante (13, 43) du segment de panneau (P' ; P"), lequel est respectivement adjacent à celles-ci.
et **en ce que** les panneaux de remplacement sont assemblés de sorte que leurs couches isolantes (13 ; 43) avec leurs zones de jonction (14, 15 ; 44, 45) associées l'une à l'autre sont alignées butant l'une contre l'autre, et
**en ce que** les segments de panneau (P' ; P"), agencés de manière rapproché l'un à l'autre dans l'alignement ainsi formé, sont reliés de manière fixe l'un à l'autre sur le panneau de remplacement (10) au moyen des sections de languette (16, 17 ; 46, 47).

2. Procédé selon la revendication 1, **caractérisé en ce que** respectivement au moins une des couches de revêtement (11, 12; 41, 42) des segments de panneau (P' ; P") dépasse, avec respectivement une section de languette, au-delà des zones de jonction (14, 15 ; 44, 45) de la couche isolante (13 ; 43) du segment de panneau (P' ; P") respectif, tandis que l'autre couche de revêtement (12, 11) du segment de panneau (P' ; P") concerné se termine avant ou sur cette zone de jonction de sa couche isolante (13 ; 43).

3. Procédé selon la revendication 2, **caractérisé en ce que** la première couche de revêtement (11) d'au moins un des segments de panneau (P') dépasse, avec une première section de languette (16, 17), au-delà d'une zone de jonction (14) de la couche isolante (13), tandis qu'elle se termine, de son côté opposé, sur ou avant la zone de jonction (15) s'y trouvant de la couche isolante (13 ; 43) du segment de panneau (P' ; P") respectif, tandis que la deuxième couche de revêtement (12) des segments de panneau (P') dépasse avec une section de languette (16, 17 ; 46, 47) respectivement au-delà de cette zone de jonction (15) de la couche isolante (13 ; 43) et la deuxième couche isolante (13 ; 43) se termine, de son côté opposé, avant ou sur la section de jonction (14) de la couche isolante (13 ; 43) qui est associée à la section de languette (16, 17; 46, 47) de la première couche de revêtement (11) du segment de panneau (P' ; P") concerné.

4. Procédé selon la revendication 2, **caractérisé en ce que** la première couche de revêtement (41) d'au moins un des segments de panneau (P") dépasse, avec une première section de languette (46), au-delà d'une zone de jonction (44) et, avec une deuxième section de languette (47), au-delà de la deuxième zone de jonction (45) de la couche isolante (43) du segment de panneau (P") respectif, tandis que la deuxième couche de revêtement (42) se termine, avec ses côtés associés aux zones de jonction (44, 45) de la couche isolante (13; 43) du segment de panneau (P' ; P") respectif, respectivement sur ou avant la zone de jonction associée de la couche isolante (13; 43).

5. Procédé selon la revendication 3 ou 4, **caractérisé en ce que** les couches de revêtement (11, 12 ; 41, 42) se terminent, sur les côtés qui ne portent aucune section de languette (16, 17; 46, 47), avec un espacement (Al) mesuré en direction longitudinale (L), avant la zone de jonction associée de la couche isolante (13 ; 43) qui correspond tout au plus à l'espacement (La) mesuré en direction longitudinale (L), au-delà duquel les sections de languette (16, 17; 46, 47) présentes des couches isolantes (11, 12; 41, 42) dépassent au-delà de la zone de jonction associée de la couche isolante (13 ; 43).

6. Procédé selon la revendication 5, **caractérisé en ce qu'**au moins un des segments de panneau (P' ; P") comporte, dans la partie dans laquelle sa couche isolante (13 ; 43) est recouverte par la section de languette (16, 17; 46, 47) du segment de panneau (P' ; P") agencé adjacent, un élément de renforcement (18, 19 ; 48, 49) inséré dans la couche isolante (13; 43) du segment de panneau (P' ; P") et s'étendant sous la couche de revêtement (11, 12; 41, 42) associée du segment du panneau (P' ; P").

7. Procédé selon la revendication 6, **caractérisé en ce que** l'élément de renforcement (18, 19 ; 48, 49) est une pièce en tôle, laquelle est insérée en alignement, par rapport à la surface de la couche isolante (13 ; 43) sur laquelle repose une des couches isolantes (11, 12; 41, 42), dans la couche isolante (13 ; 43) concernée.

8. Procédé selon l'une des revendications précédentes, **caractérisé en ce que** les segments de panneau (P' ; P") agencés côte à côte sont reliés l'un à l'autre par un collage dans la zone de chevauchement entre le segment de panneau (P' ; P") respectif et la section de languette (16, 17 ; 46, 47) s'y trouvant du segment de panneau (P' ; P") agencé adjacent.

9. Procédé selon l'une des revendications précédentes, **caractérisé en ce que** les sections de languette (16, 17 ; 46, 47) des segments de panneau (P' ; P") sont coudées, en forme de crochet, sur leur face frontale libre, et **en ce que** les couches de revêtement (11, 12; 41, 42) des segments de panneau (P' ; P"), sur leurs côtés associés aux zones de jonction (14, 15 ; 44, 45) de la couche isolante (13 ; 43) sur lesquels elles ne portent aucune section de languette (16, 17 ; 46, 47), sont pourvues d'une nervure (20, 21 ; 50, 51), avec laquelle la section de languette (16, 17 ; 46, 47) du segment de panneau (P'; P") agencé adjacent entre en prise par liaison de forme.

10. Procédé selon la revendication 9, **caractérisé en ce que** l'on prévoit dans la partie de la nervure (20, 21 ; 50, 51) un élément d'étanchéité.

11. Procédé selon l'une des revendications précédentes, **caractérisé en ce que** l'ouverture produite dans l'étape de travail b) est dimensionnée de sorte que sa longueur correspond à un multiple entier de la longueur (Ld) respectivement adoptée par les couches isolantes (13 ; 43) des segments de panneau (P' ; P").

12. Procédé selon l'une des revendications précédentes, **caractérisé en ce que** la longueur d'au moins un des segments de panneau (P' ; P"), agencés aux extrémités, du panneau de remplacement (10) est raccourcie de sorte que la longueur entièrement adoptée par les couches isolantes (13 ; 43) des segments de panneau (P' ; P") du panneau de remplacement (10) correspond à la longueur de l'ouverture produite dans l'étape de travail b).

13. Procédé selon l'une des revendications précédentes, **caractérisé en ce qu'**au moins une des couches de revêtement (11, 12 ; 41, 42) de l'élément de surface (4) est composée de segments (7_1 - 7_12) mesurés et formés de manière identique qui s'étendent, mesurés en direction longitudinale (L) de l'élément de surface (4), respectivement sur une longueur partielle de l'élément de surface (4), et **en ce qu'**au moins la longueur (La) de la couche isolante (11, 12 : 41, 42) des segments de panneau (P' ; P"), mesurée en direction longitudinale (L), laquelle est associée à la couche isolante ainsi segmentée de l'élément de surface (4), y compris les sections de languette respectivement présentes, est identique à la longueur partielle concernée.
